# DEMANDE DE BREVET EUROPEEN

(11) **EP 2 620 192 A1**
(43) Date de publication de la demande: **31.07.2013**
(21) Numéro de dépôt: 12185480.6
(22) Date de dépôt: 21.09.2012
(51) Int. Cl.: A63F 13/06, A63F 13/10

(54) **Procédé de mise en correspondance entre un périphérique d'entrée, notamment une manette de jeu, connecté à un équipement et un périphérique émulé par un programme exécuté par l'équipement**

(30) Priorité: 21.09.2011 FR 1158418
(71) Demandeur: Freebox, 75008 Paris (FR)
(72) Inventeur: Pouillon, Nicolas, 75013 PARIS (FR)
(74) Mandataire: Dupuis-Latour, Dominique

(57) **Abrégé**

Ce procédé comprend les étapes suivantes : après connexion (402) de la manette de jeu réelle à l'équipement, détermination (404 ; 410-424) d'une représentation source d'un premier ensemble de commandes de cette manette réelle ; détermination d'une représentation cible d'un second ensemble de commandes correspondant à une manette de jeu virtuelle émulée par un programme de jeu ; création (406) d'une table de correspondance indiquant, pour chaque commande de la représentation cible, une commande correspondante parmi les commandes de la représentation source, par exécution d'un algorithme itératif de type algorithme d'appariement stable, auquel sont appliquées comme paramètres d'entrée la représentation source et la représentation cible.

## Description

L'invention concerne les périphériques d'entrée utilisés pour piloter des programmes informatiques.

Elle concerne plus précisément les programmes fonctionnant sous le contrôle de périphériques de type "universel" susceptibles d'être connectés, par fil ou sans fil, à des équipements acceptant le branchement de périphériques d'entrée de tout type, non dédiés.

Comme on va l'expliquer, l'invention s'applique très avantageusement aux jeux video utilisant des manettes de jeu ou *gamepads* comme périphérique d'entrée. Mais cette application n'est toutefois pas limitative, l'invention pouvant être mise en oeuvre, *mutatis mutandis,* au cas où le périphérique d'entrée est une télécommande, une souris, un pavé tactile, etc.

On considérera, comme exemple non limitatif, le cas particulier des jeux exécutés en branchant des manettes de jeu sur des équipements de type *box* des fournisseurs d'accès internet, qui permettent de télécharger divers programmes de jeux depuis des sites distants et d'exécuter ces jeux en local sur le téléviseur branché à l'équipement. Les commandes sont envoyées par le joueur (ou par chacun des joueurs, dans le cas de jeu à deux) au moyen d'une manette de jeu également branchée sur cet équipement, par exemple sur une prise USB accessible à l'utilisateur ou par une liaison sans fil de type *Bluetooth* ou autre.

Un tel exemple d'équipement est par exemple le boîtier distribué par l'opérateur *Free,* Paris, France sous la dénomination *Freebox HD ou Freebox* V6. Ce boîtier intègre décodeur, magnétoscope numérique à disque dur, serveur domestique, etc. Il assure notamment le décodage des différents signaux du flux video, qui pourront être visionnés sur le téléviseur sur lequel il est branché. Il est par ailleurs couplé à un boîtier réseau disposé à proximité de la prise téléphonique d'abonné de l'utilisateur, qui assure les fonctions d'interfaçage ADSL avec la ligne téléphonique, de modem de téléphonie sur IP, de routeur sans fil Wi-Fi, etc.

Lorsqu'un utilisateur veut se servir d'un tel équipement pour jouer à un jeu video, il lui suffit donc de brancher une manette de jeu sur le boîtier, de sélectionner un jeu qu'il aura préalablement téléchargé et de lancer ce jeu, qui sera exécuté par interaction entre la manette de jeu (ou les manettes de jeu dans le cas de plusieurs joueurs) et le téléviseur.

Cette manière de procéder entraîne toutefois trois séries de difficultés pour sa mise en oeuvre.

*En premier lieu,* dans la mesure où le jeu est exécuté sur un simple boîtier de fournisseur d'accès Internet et non sur un contrôleur spécifique acquis à cette fin, l'utilisateur y branchera généralement une manette de jeu qu'il aura déjà en sa possession, par exemple une manette récupérée d'un système, ancien ou récent, destiné à un contrôleur spécifique, ou une manette de jeu générique de type "manette universelle" pourvue d'une multitude de commandes.

Le boîtier devra de ce fait pouvoir fonctionner avec des types de manettes de jeu très disparates, non identifiables *a priori,* éventuellement avec plusieurs manettes différentes utilisées concurremment, dans le cas d'un jeu à plusieurs joueurs : dans ce dernier cas, on peut ainsi se trouver en présence, pour un même jeu, d'une manette générique et d'une manette spécifique, de deux manettes spécifiques provenant de deux fabricants différents, de deux manettes génériques différentes, etc., le seul élément commun étant le logiciel de jeu téléchargé dans le boîtier.

On estime généralement qu'il est possible de rencontrer 100 à 200 modèles de manettes de jeu souvent plus ou moins ressemblantes, mais jamais identiques ni normalisées, différant entre elles par le nombre des commandes, et la nature de ces commandes (bouton, manche à balai ou *joystick,* croix directionnelle, etc.), leur disposition physique sur la manette (et donc le doigt qui les actionnera), ou encore les données numériques susceptibles d'être produites par leur activation (donnée binaire 1/0 ou bien série de valeurs, par exemple 0-255 dans le cas d'un manche à balai).

On ne dispose ainsi d'aucune garantie d'adaptabilité entre les manettes de jeu susceptibles d'être branchées sur le boîtier, compte tenu en particulier de l'évolution des différentes générations de matériel. Par exemple, les boutons présents sur un matériel plus ancien peuvent ne pas tous se trouver sur un matériel plus récent, ou bien seront disponibles mais à une autre position.

Le logiciel se trouve donc très rapidement confronté au problème consistant à trouver la correspondance optimale entre le(s) périphérique(s) branché(s) sur le boîtier et la configuration de commandes requises pour l'exécution du jeu.

*En deuxième lieu,* dans la mesure où les manettes de jeu ne sont pas a *priori* identifiables par le boîtier, et peuvent même être d'un type totalement inconnu, il n'est pas possible d'utiliser des interfaces de pilotage de type *driver,* qui seraient stockées dans une mémoire du contrôleur du boîtier. L'utilisation d'un *driver* pour la gestion d'un périphérique impliquerait en effet que ce dernier soit identifiable et que son fonctionnement soit connu et documenté.

*En troisième lieu,* les programmes de jeux téléchargeables sont parfois des émulations de jeux d'ancienne génération, prévus pour jouer avec un matériel (donc une manette) donné, et se pose alors la difficulté de pouvoir utiliser avec des manettes récentes ces programmes développés pour une génération plus ancienne de manettes de jeu.

Cette difficulté est liée à la nécessaire compatibilité ascendante des périphériques : lorsque l'on utilise avec un matériel récent un programme conçu pour un matériel donné plus ancien, il est nécessaire de faire correspondre les périphériques d'interface utilisateur disponibles localement avec la représentation que se fait le programme du périphérique. Dans le cas des jeux video, qui n'échappent pas à cette règle, les jeux video développés pour des anciennes consoles ou d'anciens ordinateurs doivent pouvoir être utilisés aujourd'hui sur les consoles, décodeurs multimedia et ordinateurs modernes, donc avec des interfaces utilisateur récentes, notamment avec des manettes de jeu offrant plus de boutons et des commandes plus précises.

Dans ce cas, le problème consiste alors à mettre en relation une manette de jeu moderne (la manette de jeu réelle, branchée sur l'équipement) avec une manette de jeu de génération précédente (manette de jeu virtuelle, émulée par le programme), en faisant correspondre l'ordre et les valeurs rapportées par la manette effectivement branchée (manette réelle) avec des valeurs telles qu'elles seraient rapportées par la manette de génération précédente (manette émulée), et donc telles qu'attendues par le programme.

Le but de l'invention est de proposer ainsi un procédé de mise en correspondance automatique entre :
- un périphérique d'entrée utilisateur (manette réelle) connecté logiquement sur un contrôleur de jeu (microcontrôleur d'un boîtier, ou ordinateur), et
- un programme de jeu existant, prévu pour fonctionner avec un périphérique d'entrée utilisateur spécifique (virtuel) ; ce programme décrit, par un format de données *ad hoc* ce à quoi il s'attend comme matériel, c'est-à-dire qui décrit la manette de jeu spécifique, ancienne, connue de l'utilisateur original du jeu.

Bien entendu, l'utilisation du programme de jeu avec la manette qui aura été branchée doit rester équivalente en termes de ressenti ou "expérience utilisateur" avec ce qu'elle aurait été avec la manette d'origine : l'utilisateur doit pouvoir retrouver les mouvements qu'il avait utilisés sur le matériel ancien pour piloter le programme de jeu s'exécutant sur l'équipement connecté.

Pour réaliser cette mise en correspondance entre les mouvements de l'utilisateur et les entrées attendues par le programme, une solution consiste à passer par une interface de configuration préalable.

Dans ce cas, le contrôleur interroge l'utilisateur pour lui demander d'actionner sur sa manette la commande à laquelle le contrôleur s'attend (appui sur tel ou tel bouton, déplacement de tel ou tel manche à balai dans un sens ou dans l'autre, etc.), et enregistre chacune des réponses de l'utilisateur jusqu'à ce que soient ainsi définies et répertoriées toutes les commandes requises par le programme.

L'inconvénient de cette technique est qu'elle nécessite une attention particulière de l'utilisateur pour ce travail répétitif et sans intérêt. Or, dans un environnement où l'utilisateur est occasionnel (population des *casual gamers*), la durée de l'utilisation est courte et espacée. Tel est souvent le cas des personnes utilisant des équipements de type boîtier internet, dont le jeu n'est qu'une fonction subsidiaire. Obliger l'utilisateur à passer à travers une interface de configuration peut le dissuader d'utiliser cet équipement pour le jeu, ce qui rend alors, concrètement, sans intérêt cette fonctionnalité.

Le point de départ de l'invention réside dans la constatation de ce que les périphériques d'interface utilisateur, et notamment les manettes de jeu, développées depuis une quinzaine d'années mettent en oeuvre une norme HID (USB Implementers' Forum, *Device Class Definition for Human Interface Devices (HID),* 1996-2001) dans le cadre de la spécification USB (USB Implementers' Forum, *Universal Serial Bus 3.0 Specification,* 2008) ou de la spécification Bluetooth (Bluetooth SIG, *Bluetooth: Human interface device (HID) profile,* 2003).

La norme HID permet au périphérique à la fois de s'abstraire du moyen de transport des données, et de s'auto-décrire. Le périphérique peut donc être utilisé sans *driver* sur les ordinateurs respectant la norme.

D'après cette norme, trois informations sont automatiquement fournies par le périphérique :
- *Report Descriptor* : la représentation des données échangées avec l'hôte (c'est-à-dire avec le contrôleur qui reçoit les signaux du périphérique) : ces données sont découpées sous forme de *Reports,* à leur tour découpés sous forme d'*Items,* chaque *Item* étant associé à sa description sémantique (*Usage*), sa plage de valeurs, son unité ;
- *Physical Descriptor* : la description physique du contrôleur, associant chaque *Item* (correspondant à un bouton, un axe, etc.) avec une partie du corps servant à l'actionner (dans le cas d'une manette, tel ou tel doigt et sa latéralisation) ; et
- une description textuelle éventuelle donnant un ou plusieurs noms à chaque *Item.*

Dans le cas d'une manette de jeu, il est prévu un *Item* pour chaque bouton, et deux *Items* pour les manches à balai 2D ou les croix directionnelles. Chaque *Item* donne la manière dont se présente la donnée dans le flux USB, par exemple une donnée binaire 1/0 pour l'appui d'un bouton ou une série de données 0-255 pour les manches à balai.

Le descripteur physique, quant à lui, permet, lorsqu'une donnée a été identifiée dans le flux USB ou Bluetooth, de savoir de l'actionnement de quel bouton elle résulte: le pouce gauche, le bouton sous l'index droit, etc. Dans le cas où plusieurs boutons peuvent être actionnés par un même doigt (par exemple le pouce), le descripteur physique définit également un ordre de priorité, par exemple entre quatre boutons de direction, de manière à discriminer entre ces divers boutons.

Le WO 00/59594 A1 (Microsoft Corporation) décrit une technique de mappage des contrôles fournis par des périphériques d'entrée dans un système de jeu, visant à établir une correspondance entre contrôles (par le périphérique) et actions (du jeu). Le périphérique produit une description de ses commandes en format HID, mais dans cette technique le but recherché est d'adapter un même périphérique à des "genres" de jeux différents, un "genre" caractérisant un ensemble de programmes de jeux présentant entre eux des similarités qui permettent de leur attribuer une même cartographie de commandes par le périphérique : jeux de pilotage, jeux de rôle, jeux de combat, jeux de manipulation d'objets, etc. Dans ce document, les genres de jeux sont connus à l'avance, et décrits dans le périphérique lui-même. L'évolutivité d'un tel périphérique s'en voit réduite. Par ailleurs, l'utilisation de simples noms pour l'association des commandes à leur sémantique pose un problème non résolu de normalisation desdits noms.

L'invention propose, au contraire, de réaliser une mise en correspondance entre deux périphériques de générations différentes, comprenant :
- un périphérique quelconque inconnu *a priori,* logiquement connecté au contrôleur (la manette réelle) et
- un périphérique spécifique connu mais non présent, décrit statiquement par un programme de jeu (la manette de jeu virtuelle).

Selon l'invention, cette correspondance est faite automatiquement en se basant sur la représentation physique (*Physical Descriptor*) du périphérique, à savoir l'autodescription produite à la connexion du périphérique selon la norme HID (si tel n'est pas le cas, par exemple avec des manettes de jeu de bas de gamme, ou très anciennes, on verra qu'il existe toutefois des solutions de repli).

Plus précisément, l'invention propose un procédé de mise en correspondance entre :
- d'une part, un périphérique réel, connecté à un équipement en tant que périphérique d'entrée, ledit équipement comprenant un processeur apte à exécuter un programme sous le contrôle du périphérique réel connecté, et
- d'autre part, un périphérique virtuel, spécifique et différent du périphérique réel, le programme étant prévu pour fonctionner avec émulation de ce périphérique virtuel spécifique.

De façon caractéristique de l'invention, ce procédé comprend les étapes suivantes :
a) après connexion du périphérique réel à l'équipement, détermination d'une représentation source d'un premier ensemble de commandes susceptibles d'être produites en sortie par le périphérique réel ;
b) détermination d'une représentation cible d'un second ensemble de commandes formant commandes d'entrée du programme, cette représentation cible étant une représentation prédéterminée correspondant au périphérique virtuel,
   la représentation source et la représentation cible différant par le nombre des commandes, la disposition physique des commandes sur le périphérique, et/ou les valeurs numériques susceptibles d'être générées par l'actionnement de chaque commande ;
c) création d'une table de correspondance indiquant, pour chaque commande de la représentation cible, une commande correspondante parmi les commandes de la représentation source,
   cette table de correspondance étant créée par détermination de groupes successifs de commandes, respectivement de la représentation cible et de la représentation source, obtenus par exécution d'un algorithme itératif de type algorithme d'appariement stable auquel sont appliquées comme paramètres d'entrée la représentation source déterminée à l'étape a) et la représentation cible déterminée à l'étape b).

La représentation source est généralement déterminée à l'étape a) à partir d'informations d'autodescription de périphérique produites après connexion du périphérique réel à l'équipement, ces informations comprenant, pour chaque commande du périphérique réel, des données de valeurs numériques susceptibles d'être générées par l'actionnement de la commande et des données de disposition physique de la commande sur le périphérique.

Dans une forme de mise en oeuvre avantageuse, l'étape a) comprend la détection préalable de la délivrance ou non d'informations d'autodescription de périphérique produites après connexion du périphérique réel à l'équipement.

En l'absence de détection, il est possible d'interroger un site distant pour l'obtention, à partir d'un identifiant du périphérique réel, de la représentation source mémorisée dans une base de données.

En cas de non-obtention de la représentation source par interrogation du site distant, il est possible de déterminer la représentation source par exécution d'un algorithme de configuration interactif de type questions/réponses avec affichage à l'utilisateur de questions correspondant à un apprentissage de la représentation physique du périphérique réel, et identification des commandes activées par l'utilisateur en réponse à ces questions. La représentation source déterminée par exécution de l'algorithme interactif de configuration est avantageusement transmise au site distant pour mémorisation dans la base de données.

Le périphérique d'entrée réel peut être notamment :
- une manette de jeu réelle connectée à l'équipement ; dans ce cas, le périphérique d'entrée virtuel est une manette de jeu virtuelle, le programme étant un programme de jeu, prévu pour fonctionner avec émulation de la manette de jeu virtuelle ;
- une télécommande réelle connectée à l'équipement ; dans ce cas, le périphérique d'entrée virtuel est une télécommande virtuelle, le programme étant prévu pour fonctionner avec émulation de la télécommande virtuelle ;
- une souris réelle ou un pavé tactile réel connectés à l'équipement ; dans ce cas, le périphérique d'entrée virtuel est une souris virtuelle, le programme étant prévu pour fonctionner avec émulation de la souris virtuelle.

On va maintenant décrire un exemple de mise en oeuvre du procédé de l'invention, en référence aux dessins annexés où les mêmes références numériques désignent d'une figure à l'autre des éléments identiques ou fonctionnellement semblables.
La Figure 1 est une représentation schématique des différents blocs fonctionnels et éléments matériels mis en oeuvre par l'invention.
La Figure 2 est un exemple de manette de jeu utilisable avec le procédé de l'invention, avec ces différents boutons et commandes.
La Figure 3 est un organigramme explicitant les différentes phases du procédé de l'invention.
La Figure 4 est un tableau expliquant les représentations source et cible mises en correspondance par l'invention, avec les différentes commandes correspondantes.

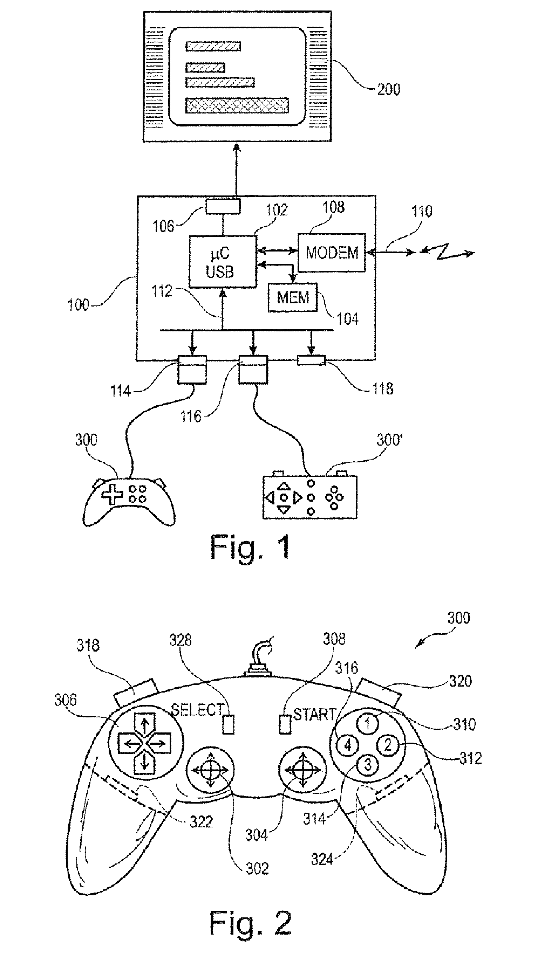

Sur la Figure 1, la référence 100 désigne de façon générale un équipement permettant de mettre en oeuvre l'invention. Cet équipement peut être soit un ordinateur ou un boîtier d'un système de jeu video, soit, dans l'exemple décrit ici, un boîtier de décodeur TV mis à disposition par un fournisseur d'accès internet, destiné à être branché sur un téléviseur 200, par exemple un boîtier de type *Freebox HD ou Freebox V6* distribué par l'opérateur *Free,* Paris, France.

Plus précisément, le boîtier 100 comporte un microcontrôleur 102 avec sa mémoire 104 et une interface 106 permettant de contrôler l'image affichée sur le téléviseur 200. Le contrôleur est par ailleurs couplé à un modem 108 (intégré au boîtier 100 ou placé à distance dans un boîtier distinct) permettant de gérer l'échange de données avec la ligne téléphonique d'abonné 110, notamment pour le téléchargement de programmes de jeux depuis un site distant, vers la mémoire 104 du boîtier 100.

Le microcontrôleur 102 est couplé par un bus de type USB à une ou plusieurs prises USB 114, 116, 118.

Sur ces prises USB l'utilisateur pourra brancher une ou plusieurs manettes de jeu 300, 300' qui seront ainsi couplées au microcontrôleur 102 pour permettre l'exécution d'un jeu video par interaction entre la ou les manettes 300, 300' et l'image affichée sur le téléviseur 200.

Le couplage entre les manettes 300, 300' peut être, en variante, un couplage sans fil de type *Bluetooth,* si les manettes et le boîtier 100 sont équipés de tels moyens de communication et d'échange de données.

La Figure 2 illustre un exemple de commandes disponibles sur une manette de jeu 300 susceptible d'être utilisée pour l'exécution du jeu. Dans l'exemple illustré, la manette 300 comprend par exemple :
- deux manches à balai ou *joysticks* 302, 304, mobiles selon deux directions XY, actionnés respectivement par les pouces gauche et droit,
- une croix directionnelle 306 comportant quatre boutons droite/gauche/haut/bas actionnables par le pouce gauche,
- un bouton *Start* 308 de lancement du jeu, actionnable par le pouce droit,
- un pavé de quatre boutons 310, 312, 314, 316, numérotés et/ou colorés différemment, actionnables par le pouce droit,
- des boutons 318, 320 actionnables respectivement par les index gauche et droit,
- des boutons inférieurs 322, 324 actionnables respectivement par les majeurs gauche et droit,
- un bouton additionnel *Select* 328 actionnable par l'index gauche,
- etc.

Cette représentation des commandes de la manette de jeu qui sera connectée au contrôleur n'est bien entendu qu'illustrative, un très grand nombre de variantes peuvent être rencontrées, tant en ce qui concerne la disposition des commandes que leur présence ou non, et les signaux qu'elles génèrent.

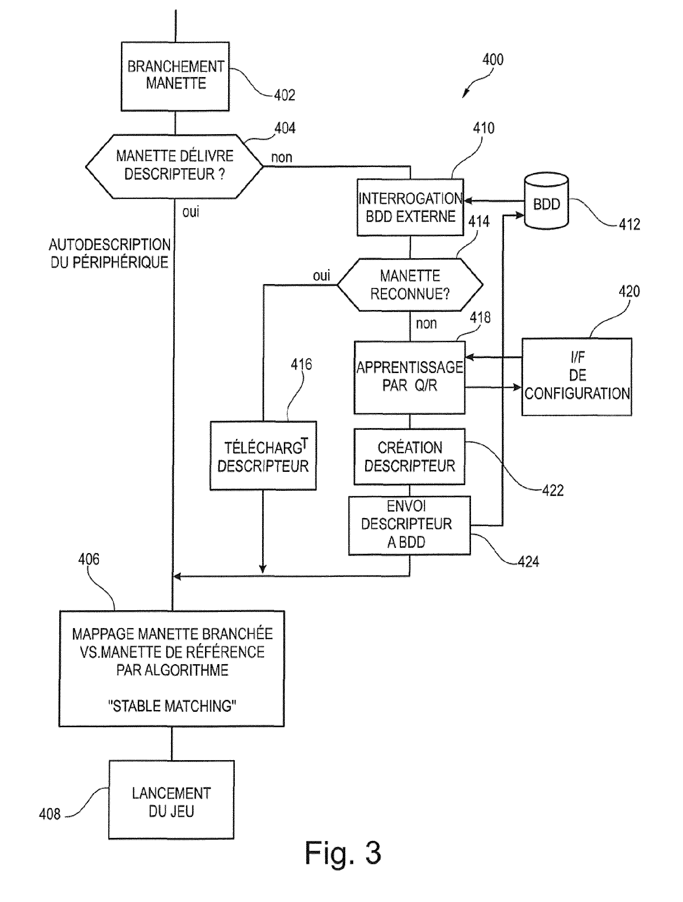

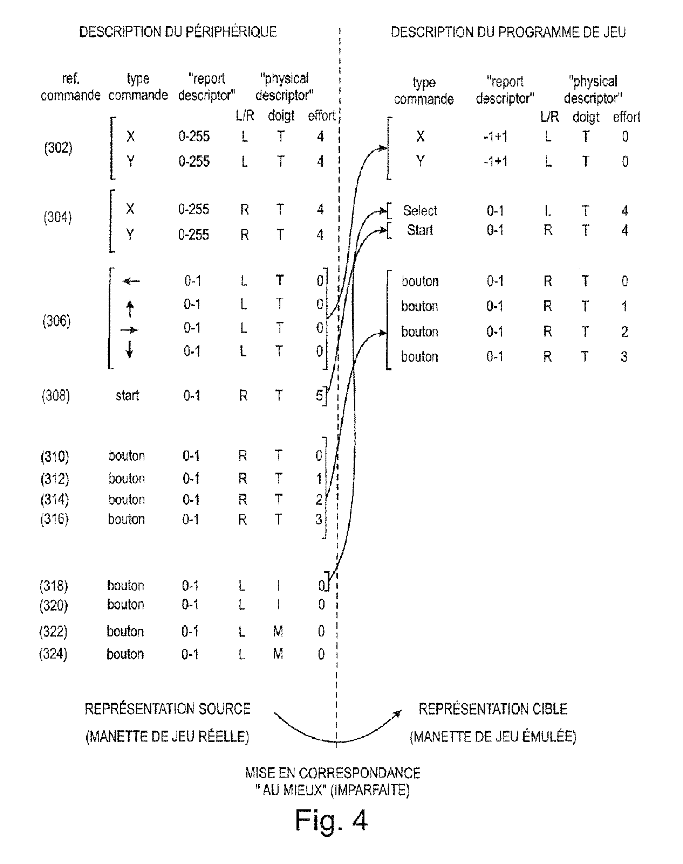

On va maintenant décrire, en référence aux Figures 3 et 4, le déroulement des différentes étapes du procédé de l'invention.

Comme indiqué sur l'organigramme 400 de la Figure 3, la première étape consiste à brancher (étape 402) la manette sur le boîtier contenant le microcontrôleur 102. Ce dernier vérifie (étape 404) que la manette lui délivre bien un descripteur physique, c'est-à-dire qu'elle opère conformément à la norme HID indiquée plus haut.

Si tel est le cas, le périphérique reçoit ainsi une représentation, dénommée "représentation source" de l'ensemble des commandes susceptibles d'être produites en sortie par la manette qui vient d'être branchée.

Cette représentation source est illustrée sur la partie gauche de la Figure 4, qui précise, pour chaque commande de la manette (identifiée par sa référence numérique sur la Figure 2) :
- le type de commande dont il s'agit : commande bidirectionnelle XY par un manche à balai (pour les commandes 302 et 304), croix directionnelle (pour la commande 306), bouton à enfoncer (pour les autres commandes, 308 à 324) ;
- le champ *Report Descriptor* de la norme HID, c'est-à-dire la description du type de donnée qui sera transmise dans le flux USB : soit une donnée binaire 0/1, pour les différents boutons 306 à 324, soit une échelle de données 0-255 pour les manches à balai 302 et 304 ;
- le champ *Physical Descriptor* de la norme HID, explicitant la position physique de la commande et la manière de l'actionner avec, plus précisément :
   - la latéralisation, gauche (L) ou droite (R);
   - le doigt devant actionner la commande : pouce (T), index (I), majeur (M);
   - un paramètre "effort" qui indique le caractère plus ou moins immédiat de l'accès à la commande : pour un bouton associé à un seul doigt, la valeur est "0" (boutons 306 ou 318 à 324, par exemple), tandis que dans le cas où plusieurs boutons sont associés à un même doigt, des valeurs différenciées sont utilisées, reflétant la distance entre le bouton et la position de repos du doigt : par exemple des valeurs 0, 1, 2, 3, pour les boutons 310, 312, 314, 316 signifient que l'appui sur le bouton 314 est plus aisé que l'appui sur le bouton 310. Ce paramètre définit donc l'ordre des commandes situées dans un même zone.

Une fois obtenue cette représentation source décrivant le périphérique couplé au contrôleur (manette de jeu réelle), l'étape suivante (étape 406, Figure 3) consiste à opérer une correspondance entre cette description et les besoins du programme de jeu, définie sous forme d'une représentation cible d'un ensemble de commandes correspondant à une manette de jeu virtuelle, émulée par le programme.

Un exemple d'une telle représentation cible est illustrée sur la partie droite de la Figure 4, où l'on voit que le jeu nécessite en fait un nombre plus réduit de commandes que ce que peut lui offrir le périphérique, avec :
- une commande XY en "tout ou rien" susceptible de fournir des valeurs -1 et +1, sous l'action du pouce gauche,
- une commande de sélection, par le pouce gauche,
- une commande de démarrage de jeu, par le pouce droit,
- quatre boutons hiérarchisés (avec des numéros et/ou des couleurs différentes), commandés par le pouce droit.

Cette représentation est bien entendu purement illustrative et n'est donnée que pour expliquer le fonctionnement de l'invention.

De façon caractéristique, la mise en correspondance entre la représentation source et la représentation cible est opérée par un algorithme de type "à appariement stable" (*Stable Matching*), itéré pour chaque commande de la manette de jeu émulée de la représentation cible.

Les "problèmes d'appariement stable" (*Stable Matching Problems* ou SMPs) ont été notamment exposés dans les articles de Roth AE, Stability and Polarization of Interests in Job Matching, Econometrica, vol.52, No. 1, janvier 1984, et Martinez R et al., An Algorithm to Compute the Set of Many-to-Many Stable Matchings, UFAE and IAE Working Papers 457.00, février 2000.

Ces algorithmes mettent en relation des groupes de *travailleurs* avec des ensembles d'*entreprises.* Ils reposent sur des *listes de préférences,* émises par chaque *travailleur* sur leur souhait de travailler avec certains collègues (d'autres *travailleurs*) pour le compte d'un ensemble d'*entreprises* donné. Les listes de préférences réciproques (des groupes d'*entreprises* envers des groupes de *travailleurs*) sont aussi nécessaires.

Dans le cadre de l'invention, pour mettre en correspondance la représentation source avec la représentation cible des périphériques de commande, ces algorithmes sont applicables si l'on peut produire des listes de préférences de chaque ensemble d'*items* source avec chaque ensemble de valeurs attendues par le programme. Les listes de préférence sont déterminées par pondération de :
- la proximité sémantique des données : par exemple, une axe vertical est proche d'un autre axe vertical, mais pas d'un bouton ;
- la similitude physique de l'actionnement par l'utilisateur : par exemple, entre deux axes verticaux sémantiquement équivalents, on préférera la mise en correspondance de ceux actionnés par le pouce gauche.

La mise en oeuvre de cet algorithme permettra, dans l'exemple illustré, d'associer par exemple :
- les commandes X et Y de la représentation cible aux touches de la croix directionnelle 306 de la manette de jeu réelle,
- le bouton de sélection au bouton 318 de la manette,
- le bouton de démarrage au bouton 308 de la manette, et
- les quatre boutons de couleurs ou de numéros différents aux boutons 310 à 316 du pavé correspondant de la manette 300.

Ces associations sont illustrées par les flèches sur la Figure 4.

La correspondance est la plupart du temps parfaite : en effet, comme à chaque nouvelle génération les manettes comportent toujours plus de boutons, ces nouvelles manettes représentent un sur-ensemble des anciennes, ce qui rend le *mapping* parfait possible malgré les différences existant entre la manette de jeu réelle et la manette de jeu émulée du point de vue de la présence, de la nature et de la position des différentes commandes.

On notera toutefois que la mise en correspondance selon l'invention n'est pas restreinte à des couples {*source*, *cible*}*,* mais peut aussi mettre en oeuvre plusieurs *items* de chaque côté, par exemple {*source0, source1, cible*}*.*

Ce cas se rencontre lorsque l'on fait correspondre des commandes qui ne sont pas représentées sémantiquement de la même manière. Une croix directionnelle peut par exemple se représenter de trois manières différentes :
- par quatre boutons indépendants (haut, bas, gauche, droite);
- par deux axes (haut/bas, gauche/droite) ;
- par un seul axe désignant la direction dans laquelle pointe l'utilisateur, sous forme d'angle (le HID nomme ce type de valeur un *hat*)*.*

Il peut alors survenir un cas où l'on essaye de mettre en correspondance des *items* déclarés par un périphérique réel d'une manière imprévisible, avec des *valeurs* attendues par un programme de manière fixe, choisie parmi les trois.

Le problème d'appariement stable 1 → 1 devient alors un problème d'appariement stable M → N. Cette différence fait passer la résolution d'un problème simple (en n2) à celle d'un problème NP-complet, *a priori* non soluble en temps borné. D'où la pertinence d'algorithmes tels que les deux précités, qui donnent une solution exploitable même dans le cas d'un problème NP-complet.

L'utilisation d'un algorithme de type à appariement stable permet toutefois d'obtenir une mise en correspondance "au mieux", efficace et quasi-immédiate, ce qui permettra au joueur de lancer le jeu (étape 408) tout de suite après avoir branché la manette. La correspondance entre la manette réelle et la manette émulée étant automatiquement optimisée, le ressenti ou "expérience utilisateur" du joueur sera préservé au mieux.

En l'absence d'autodescription du périphérique, c'est-à-dire si à l'étape 404 le contrôleur ne détecte pas de descripteur délivré par le périphérique, il peut être avantageux de prévoir des solutions de repli.

Le contrôleur peut notamment interroger une base de données externe, par exemple une base de données 412 conservée sur le site du fournisseur d'accès internet, qui conserve en mémoire les descriptions des le périphériques connus.

Si le périphérique qui a été branché est reconnu (étape 404), le descripteur est alors téléchargé (étape 416) et la mise en correspondance par l'algorithme d'appariement stable (étape 406) peut être opérée, comme dans le cas précédent.

Si le périphérique n'est pas reconnu, qu'il ne soit pas identifiable ou bien qu'il ne corresponde à aucune rubrique de la base de données 412, le descripteur est alors construit, commande par commande, par une technique d'apprentissage par questions-réponses (étape 418) via une interface 420 avec le téléviseur : au moyen de ce dernier, le contrôleur interroge le joueur avec chacune des commandes successives attendues (commandes du périphérique) et demande au joueur d'appuyer sur un bouton du périphérique qu'il a entre les mains (commande du périphérique), en réponse. Le bouton utilisé est alors identifié, ce qui permet la création au fur et à mesure d'un descripteur HID *Physical Descriptor* (étape 422) qui servira ensuite à la mise en correspondance de l'étape 406, comme auparavant. Le descripteur ainsi constitué est avantageusement envoyé au site distant (étape 424) pour enrichir la base de données 412. L'étape 418 de questions-réponses n'est donc nécessaire qu'une fois par périphérique, préservant globalement au mieux le ressenti ou "expérience utilisateur".

## Revendications

1. Un procédé de mise en correspondance entre :
- d'une part, un périphérique réel (300), connecté à un équipement (100) en tant que périphérique d'entrée, ledit équipement comprenant un processeur (102) apte à exécuter un programme sous le contrôle du périphérique réel connecté, et
- d'autre part, un périphérique virtuel, spécifique et différent du périphérique réel, le programme étant prévu pour fonctionner avec émulation de ce périphérique virtuel spécifique,
**caractérisé par** les étapes suivantes :
a) après connexion (402) du périphérique réel à l'équipement, détermination (404 ; 410-424) d'une représentation source d'un premier ensemble de commandes (302-330) susceptibles d'être produites en sortie par le périphérique réel ;
b) détermination d'une représentation cible d'un second ensemble de commandes formant commandes d'entrée du programme, cette représentation cible étant une représentation prédéterminée correspondant au périphérique virtuel,
la représentation source et la représentation cible différant par le nombre des commandes, la disposition physique des commandes sur le périphérique, et/ou les valeurs numériques susceptibles d'être générées par l'actionnement de chaque commande ;
c) création (406) d'une table de correspondance indiquant, pour chaque commande de la représentation cible, une commande correspondante parmi les commandes de la représentation source,
cette table de correspondance étant créée par détermination de groupes successifs de commandes, respectivement de la représentation cible et de la représentation source, obtenus par exécution d'un algorithme itératif de type algorithme d'appariement stable auquel sont appliquées comme paramètres d'entrée la représentation source déterminée à l'étape a) et la représentation cible déterminée à l'étape b).

2. Le procédé de la revendication 1, dans lequel la représentation source est déterminée à l'étape a) à partir d'informations d'autodescription de périphérique produites après connexion (402) du périphérique réel à l'équipement, ces informations comprenant, pour chaque commande (302-330) du périphérique réel, des données (*Report Descriptor*) de valeurs numériques susceptibles d'être générées par l'actionnement de la commande et des données (*Physical Descriptor*) de disposition physique de la commande sur le périphérique.

3. Le procédé de la revendication 1, dans lequel l'étape a) comprend:
a1) la détection préalable (404) de la délivrance ou non d'informations d'autodescription de périphérique produites après connexion (402) du périphérique réel à l'équipement ; et
a2) en l'absence de détection à l'étape a1), l'interrogation (410) d'un site distant pour l'obtention, à partir d'un identifiant du périphérique réel, de la représentation source mémorisée dans une base de données (412).

4. Le procédé de la revendication 3, dans lequel dans lequel l'étape a) comprend :
a3) en l'absence (414) d'obtention de la représentation source par interrogation du site distant, détermination (418) de la représentation source par exécution d'un algorithme de configuration interactif (420) de type questions/réponses avec affichage à l'utilisateur de questions correspondant à un apprentissage de la représentation physique (*Physical Descriptor*) du périphérique réel, et identification des commandes activées par l'utilisateur en réponse à ces questions.

5. Le procédé de la revendication 4, dans lequel la représentation source déterminée par exécution de l'algorithme interactif de configuration est transmise au site distant pour mémorisation dans la base de données (412).

6. Le procédé de l'une des revendications 1 à 5, dans lequel le périphérique d'entrée réel est une manette de jeu réelle (300) connectée à l'équipement (100), le périphérique d'entrée virtuel est une manette de jeu virtuelle, le programme étant un programme de jeu prévu pour fonctionner avec émulation de la manette de jeu virtuelle.

7. Le procédé de l'une des revendications 1 à 5, dans lequel le périphérique d'entrée réel est une télécommande réelle connectée à l'équipement (100), le périphérique d'entrée virtuel est une télécommande virtuelle, le programme étant prévu pour fonctionner avec émulation de la télécommande virtuelle.

8. Le procédé de l'une des revendications 1 à 5, dans lequel le périphérique d'entrée réel est une souris réelle ou un pavé tactile réel connectés à l'équipement (100), le périphérique d'entrée virtuel est une souris virtuelle, le programme étant prévu pour fonctionner avec émulation de la souris virtuelle.
